# EUROPEAN PATENT APPLICATION

(11) **EP 2 190 170 A1**
(43) Date of publication of application: **26.05.2010**
(21) Application number: 09174892.1
(22) Date of filing: 03.11.2009
(51) Int. Cl.: H04L 29/08, H04W 52/02

(54) **Method and system for providing presence service**

(30) Priority: 20.11.2008 KR 20080115611
(71) Applicant: Samsung Electronics Co., Ltd., Suwon-si, Gyeonggi-do (KR)
(72) Inventor: Hong, Sung Min, Suwon-si, Gyeonggi-do (KR)
(74) Representative: Ketelaars, Maarten F.J.M.

(57) **Abstract**

A system is configured to provide a presence service with reduction of resource and energy waste. The presence service method includes receiving, at a presence server (120), a message (345) requesting suspension of delivery of presence information of presentities (130,131) subscribed by a watcher (110), the suspension request message being transmitted by the watcher of which a sleep mode condition is satisfied; receiving a changed part of the presence information (355,365) from one of the presentities; retaining the changed part of the presence information; receiving a message (375) requesting restart of the delivery of presence information from the watcher; and sending the changed part of the presence information (385) to the watcher in response to the restart request message.

## Description

### TECHNICAL FIELD OF THE INVENTION

The present invention relates to a presence service and, in particular, to a method and system for providing a presence service with reduction of resource and energy waste.

### BACKGROUND OF THE INVENTION

The traditional circuit switching networks used for voice service have migrated to Internet Protocol (IP) -based packet data network for providing data service as well as voice service. IP Multimedia subsystem (IMS) is one of the advanced IP-based network architectures. Recently, IMS has made various IP-based services available to users, and a messaging service is a very popular service using the IMS. The IMS messaging can be provided in two modes: page mode messaging and session-mode messaging. In the page mode messaging service, a short message or a short media message is delivered over a Session Initiation Protocol (SIP) message that is transmitted for a SIP session. Whereas, in the session-mode messaging service, the message is delivered over a Message Session Replay Protocol (MSRP) message for the MSRP session established using the SIP session.

A presence service is one of the basic services supported by the IMS. The presence service provides presence information such as status information of terminals registered for a specific service. The presence information includes presence status of the registered terminal or user, such as online, offline, busy, do-not-disturb, and mood. The presence information is transmitted over a presence message in response to a subscriber's request such that the subscriber can acquire the current present information about a registered user's terminal. In the current presence service, the presence server transmits the presence information whenever the presence information of the registered terminal is updated even when the subscriber does not want to receive. Particularly when a plurality of user terminals are registered, the number of times that the updated presence information is received increases exponentially, whereby this causes traffic overhead in the network, resulting in wastes of resource and power for processing the unnecessary presence service message. There is therefore a need of a method for improving the network efficiency by preventing unnecessary presence information from being transmitted.

### SUMMARY OF THE INVENTION

To address the above-discussed deficiencies of the prior art, it is a primary object to provide a method and system for providing a presence service that is capable of improving the system throughput by preventing unnecessary presence information from being transmitted.

In accordance with an exemplary embodiment of the present invention, a method for providing a presence service includes receiving, at a presence server, a message requesting suspension of a delivery of presence information of presentities subscribed by a watcher, the suspension request message being transmitted by the watcher of which a sleep mode condition is satisfied; receiving a changed part of the presence information from one of the presentities; retaining the changed part of the presence information; receiving a message requesting restart of the delivery of presence information from the watcher; and sending the changed part of the presence information to the watcher in response to the restart request message.

In accordance with another exemplary embodiment of the present invention, a system for providing a presence service includes at least one presentity that provides presence information; a watcher that requests initiation of the presence service when a sleep mode condition is satisfied and suspension of the presence service when the sleep mode condition is dissatisfied; and a server that receives and stores the presence information provided by the at least one presentity and delivers the presence information to the watcher or retains the presence information according to the requests of the watcher.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention. These features and advantages of the present invention will become more fully apparent from the following description and appended claims, or may be learned by the practice of the invention as set forth hereinafter.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a schematic diagram for a presence system according to an exemplary embodiment of the present invention;

FIGURE 2 illustrates a sequence diagram for operations of the entities composing the presence system of FIGURE 1 for providing a presence service according to an exemplary embodiment of the present invention;

FIGURE 3 illustrates a sequence diagram for operations of the entities composing the presence system of FIGURE 1 for providing a presence service according to another exemplary embodiment of the present invention;

FIGURE 4 illustrates a flowchart for a method for providing a presence service according to an exemplary embodiment of the present invention from the viewpoint of a watcher; and

FIGURE 5 illustrates a flowchart for a method for providing a presence service according to an exemplary embodiment of the present invention from the viewpoint of a presence server.

### DETAILED DESCRIPTION OF THE INVENTION

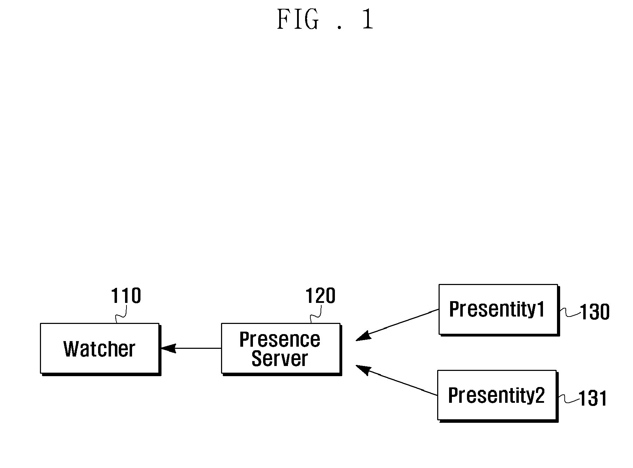

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication network.

FIGURE 1 illustrates a schematic diagram for a presence system according to an exemplary embodiment of the present invention. A presence service is one of the basic services provided along with instant messaging service in the IMS-based network. The presence service is a system that accepts, stores and distributes presence information on the terminals registered by a user. The presence service allows people to locate the registered users and availability of the users with their presence status. The presence system for providing the presence service can be composed of two different types of clients and a server. The first type of client is a presentity that provides the presence information to the presence service, and the second type of client is a watcher that accepts the presence information distributed by the presence service. The server is presence server that accepts and stores the presence information provided by the presentity and distributes the presence information to the watcher. Here, the presence information includes the status information of the presentity, i.e., the terminal. The watcher can register a plurality of presentities with the presence server. In the example of FIGURE 1, the watcher has registered two presentities with the presence server 120.

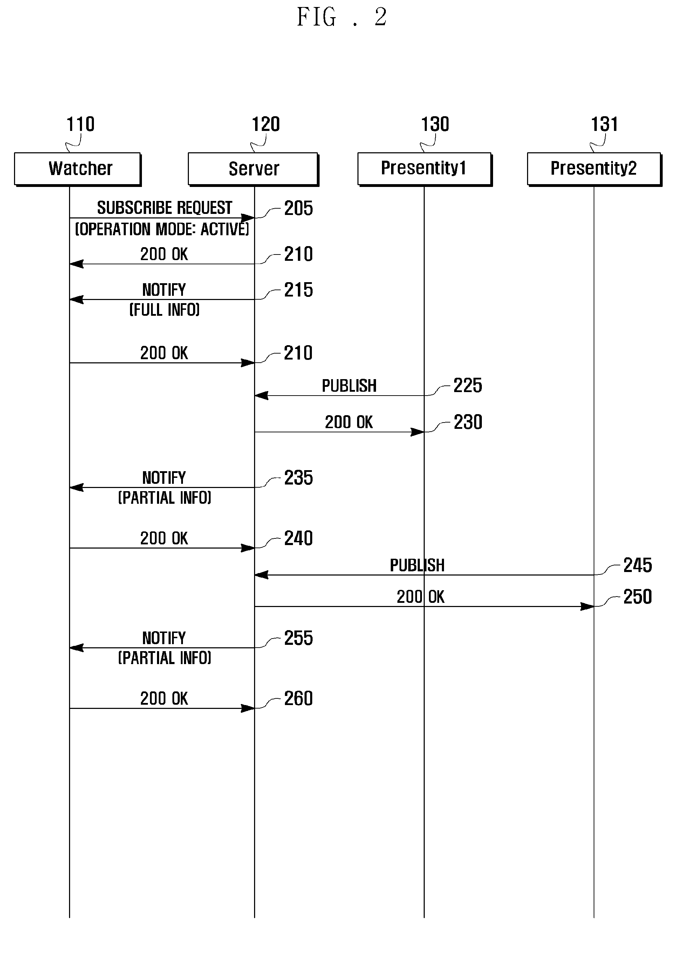

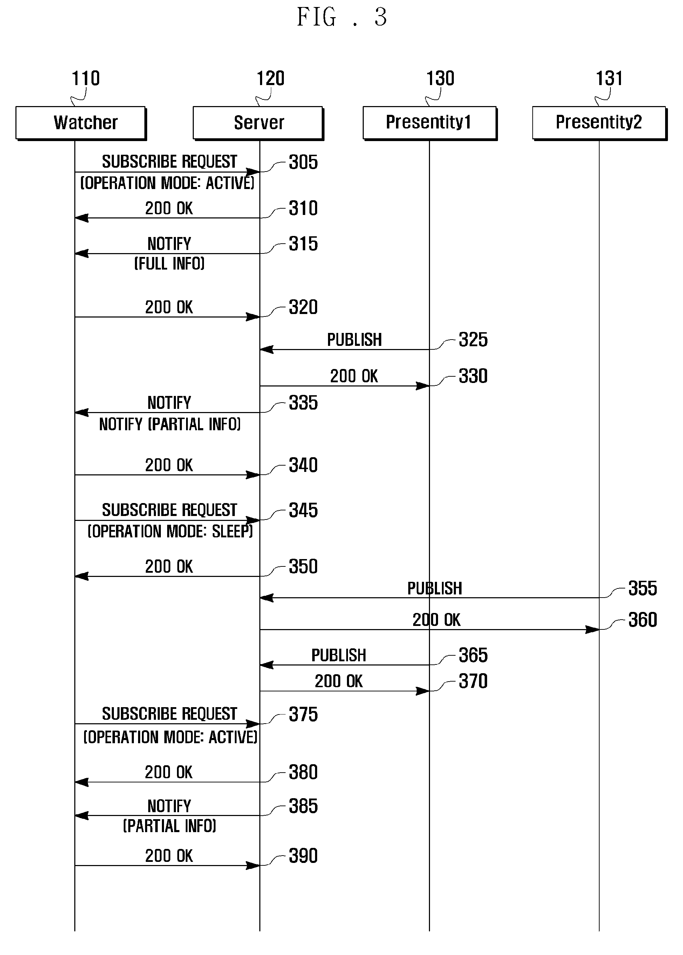

As shown in FIGURE 1, the presence system includes a watcher 110, a presence server 120, and two presentities: presentity1 130 and presentity2 131. The operations of the watcher 110, the presence server 120, and the presentities 130 and 131 within the presence system are described in detail with reference to FIGURES 2 and 3.

FIGURE 2 illustrates a sequence diagram for operations of the entities composing the presence system of FIGURE 1 for providing a presence service according to an exemplary embodiment of the present invention.

Referring to FIGURE 2, when the watcher wants to know the presentities' presence status, the watcher 110 sends a SUBSCRIBE request message 205 to the presence server 120. The presentities can be subscribed to an ISM server deployed in the IMS network supporting presence service. Here, it is assumed that the presentity1 130 and the presentity2 131 previously have been subscribed to the IMS server through a presentity registration procedure. The SUBSCRIBE request message is a SIP-based message and formatted as shown in Table 1.

**Table 1**

| | |
|---|---|
| SUBSCRIBE sip:joe@example.com SIP/2.0 | |
| | Via: SIP/2.0/UDP pc34.example.com;branch=z9hG4bKnashds7 |
| | From: sip:joe@example.com;tag=123aa9 |
| | To: sip:joe@example.com |
| | Call-ID: 9987@pc34.example.com |
| | CSeq: 9887 SUBSCRIBE |
| | Contact: sip:joe@pc34.example.com |
| | Event: presence.winfo |
| Expires: 3600 | |
| | Max-Forwards: 70 |
| Operation-Mode : Active | |

In Table 1, the start line of the message indicates that the SIP method is SUBSCRIBE and which version of SIP the message conforms to. The following fields carry information about session. The head fields include a "From" field carrying the SIP URI of the initiator of the request; a "To" field for carrying the desired recipient of the request; and "Contact" field for carrying the SIP URI that can be used for requests; a "Call ID" field for carrying the unique identifier of the session; a "CSeq" field for carrying the sequence number and method name; an "Event" field for carrying the event information; an "Expire" field for carrying the valid time for subscription; a "Max-Forwards" field for carrying the maximum number of hops the message can traverse on its way to the destination; and an "Operation-Mode" field for carrying the operation mode. It is noted that the SUBSCRIBE request message can include the Operation-Mode field. When no presence information is needed, the watcher 100 sends the SUBSCRIBE request message including the Operation-Mode field is set to "Active" as shown in Table 1 in order for the presence server 120 to suspend the transmission of the presence information. The operations of the presence system when the presence information is not required are described later with reference to FIGURE 3. The SUBSCRIBE request message can be composed of a Header without message body as shown in table 1. Typically the body of the message is written in Extensible Markup language (XML). If the SUBSCRIBE request message is authenticated and accepted, then the presence server 120 sends a 200 OK response message 210 to the watcher 110. The authentication and acceptance to the SUBSCRIBE request is performed by the presence server 120. Since the authentication and acceptance process is out of the scope of the present invention, detailed description on the authentication and acceptance process is omitted. Upon receipt of the SUBSCRIBE request message, the presence server 120 stores the SUBSCRIBE request message along with the operation mode of the watcher 110.

Next, the presence server 120 sends a NOTIFY message 215 containing presence Information about presentities subscribed by the watcher 110 to the watcher 110. Here, it is assumed that the presentity1 130 and presentity2 131 are the presentities subscribed by the watcher 110. Upon receipt of the NOTIFY message, the watcher 110 sends a 200 OK message 220 to the presence server 120. The presentity1 130 and the presentity2 131 send PUBLISH messages containing changed part of their presence information to the presence server 120 whenever the presence information is changed. If the presence status of the first presentity1 130 changes, the first presentity1 130 sends the PUBLISH message 225 containing the changed part of the presence information to the presence server 120. Upon receipt of the PUBLISH message transmitted by the first presentity1 130, the presence server 130 sends the 200 OK message 230 to the first presentity1 130.

Once the changed part of the presence information of the first presentity1 130 is received, the presence server 120 stores the changed part of the presence information of the first presentity1 130 and checks the operation mode of the watcher 110 to notify of the change of the presence information of the first presentity1 130. Although there can be more than one watchers subscribed to the presence information of the first presentity1 130, it is assumed that only one watcher, i.e., the watcher 110 has subscribed the presence information of the first presentity1 130. Since the operation mode of the watcher 110 is active, the presence server 120 sends a NOTIFY message 235 for notifying the watcher 110 of the change of the presence information of the first presentity1 130. Here, the NOTIFY message 235 carries the changed part of the presence information of the first presentity1 130. The presence information contained in the body of the NOTIFY message includes at least one tuple, and each tuple can contain a basic status and optionally communication address and other presence markup. More than one tuple can compose a Presence Information Data Format (PIDF) as a minimum unit for expressing presence information. The NOTIFY message including the Full presence information delivers the PIDF, and the NOTIFY message including the changed part of the presence information delivers the presence information in units of tuple. The watcher 110 that received the NOTIFY message sends the 200 OK message 240 to the presence server 120.

In case when the presence status of the second presentity 131, the second presentity2 131 sends the changed presence information to the presence server 120. In detail, if the presence information of the second presentity2 131 is changed, the second presentity2 131 sends a PUBLISH message 245 containing the changed part of the presence information to the presence server 120. Upon receipt of the PUBLISH message 245 transmitted by the second presentity2 131, the presence server 120 sends the 200 OK message 250 to the second presentity2 131. Once the changed presence information of the second presentity2 131 is received, the presence server 120 stores the changed presence information of the second presentity2 131 and checks the operation mode of the watcher 110 to provide the presence information of the second presentity2 131. Since the operation mode of the watcher 110 is active, the presence server 120 sends a NOTIFY message 255 for notifying the watcher 110 of the change of the presence information of the second presentity2 131. The NOTIFY message carries the changed part of the presence information of the second presentity2 131. Upon receipt of the NOTIFY message, the watcher 110 sends the 200 OK message 260 to the presence server 120. Although the watcher 110 is configured to receive the presence information continuously in the example of FIGURE 2, the delivery of the presence information can be suspended. For instance, when the terminal, i.e., the watcher, does not detect any user input for requesting the presence information or operates in sleep mode, the presence information request is not initiated. In this case, the watcher 110 can send a message requesting the presence server 120 to suspend the delivery of the presence information. How to suspend the presence service is explained in another exemplary embodiment described with reference to FIGURE 3.

FIGURE 3 illustrates a sequence diagram for operations of the entities composing the presence system of FIGURE 1 for providing a presence service according to another exemplary embodiment of the present invention.

Referring to FIGURE 3, in case that the watcher wants to know the presentities' presence status, the watcher 110 sends a SUBSCRIBE request message 305 to the presence server 120. The presentities can be subscribed to the IMS server deployed in the IMS network supporting the presence service already through a presentity registration process. Here, it is assumed that the first presentity1 130 and the second presentity2 131 previously have been subscribed to the IMS server through a presentity registration procedure. The SUBSCRIBE request message is a SIP-based message and formatted as shown in table 1. The structure of the SUBSCRIBE message is identical with that described in the description of the embodiment of FIGURE 2. If the SUBSCRIBE request message is authenticated and accepted, then the presence server 120 sends a 200 OK message 310 to the watcher 110.

Upon receipt of the 200 OK message 310, the presence server 120 sends a NOTIFY message 315 containing the Full presence information of the requested presentities to the watcher 100. Here, it is assumed that the first presentity1 130 and second presentity2 131 are the presentities subscribed by the watcher 110. Upon receipt of the NOTIFY message 315, the watcher 110 sends a 200 OK message 320 to the server 120. In case that the presence information of the first presentity1 130, the first presentity1 130 sends a PUBLISH message 325 containing a changed part of its presence information to the presence server 120. If the PUBLISH message 325 transmitted by the first presentity1 130, the presence server 120 sends the 200 OK message 330 to the presence server 120.

Upon receipt of the changed part of the presence information of the first presentity1 130, the presence server 120 stores the changed part of the presence information of the first presentity1 130 and checks the operation mode of the watcher 110 to notify of the change of the presence information of the first presentity1 130. Since the operation mode of the watcher 110 is active, the presence server 120 sends a NOTIFY message 335 for notifying the watcher 110 of the change of the presence information of the first presentity1 130. Here, the NOTIFY message 335 is a message carrying the partial information of the changed presence information of first presentity1 130. Upon receipt of the NOTIFY message 335, the watcher 110 sends the 200 OK message 340 to the presence server 120.

In case that the watcher 110 wants to suspend the presence information, e.g., when the watcher 110 does not detect any user request for the presence information or operates in sleep mode, the watcher 110 can notify the presence server 120 that it operates in sleep mode such that the presence server suspends the transmission of the presence information. That is, the watcher 110 sends a SUBSCRIBE request message 345 including an Operation-Mode field set to 'sleep' to the presence server 120. This SUBSCRIBE request message 345 is a SIP-based message and is formatted as shown in Table 2.

**Table 2**

| | |
|---|---|
| SUBSCRIBE sip:joe@example.com SIP/2.0 | |
| | Via: SIP/2.0/UDP pc34.example.com;branch=z9hG4bKnashds7 |
| | From: sip:joe@example.com;tag=123aa9 |
| | To: sip:joe@example.com |
| | Call-ID: 9987@pc34.example.com |
| | CSeq: 9887 SUBSCRIBE |
| | Contact: sip:joe@pc34.example.com |
| | Event: presence.winfo |
| Expires: 3600 | |
| | Max-Forwards: 70 |
| Operation-Mode : Sleep | |

The SUBSCRIBE request message shown in Table 2 is identical with that of Table 1 except that the Operation-Mode field is set to 'sleep' to indicate that the watcher request to suspend the transmission of the presence information. If the SUBSCRIBE request message 345 including an Operation-Mode field is set 'sleep' is received, the presence server 120 updates the operation mode of the watcher 110 and sends the 200 OK message 350 to the watcher 110.

After the operation mode of the watcher 110 is updated into sleep at the presence server 120, the second presentity2 131 sends a PUBLISH message 355 including changed presence information to the server 120. Upon receipt of the PUBLISH message indicating the change of the presence information of the second presentity2 131, the presence server 120 sends the 200 OK message 360 to the second presentity2 131. Next, the presence server 120 stores the changed presence information of the second presentity2 131 and checks the operation mode of the watcher 110. In case that the operation mode of a watcher is 'sleep', the presence server 120 suspends the transmission of the presence information to the watcher. Since the operation mode of the watcher 110 has been updated into 'sleep', the presence server 120 does not send the NOTIFY message informing the watcher 110 of the change of the presence information of the second presentity2 131 but retains the changed presence information of the second presentity2 131.

Also, if the presence information of the first presentity1 130 is changed, the first presentity1 130 sends a PUBLISH message 365 including the changed presence information to the presence server 120. Upon receipt of the PUBLISH message 365 from the first presentity1 130, the presence server 120 sends the 200 OK message 370 to the first presentity1 130. Next, the presence server 120 stores the changed presence information of the first presentity1 130 carried by the PUBLISH message 365 and checks the operation mode of the watcher 110. Since the operation mode of the watcher is 'sleep' yet, the presence server 120 suspends the transmission of the NOTIFY message to inform the watcher 110 of the change of the presence information of the first presentity1 130 but retains the change presence information of the first presentity1 130.

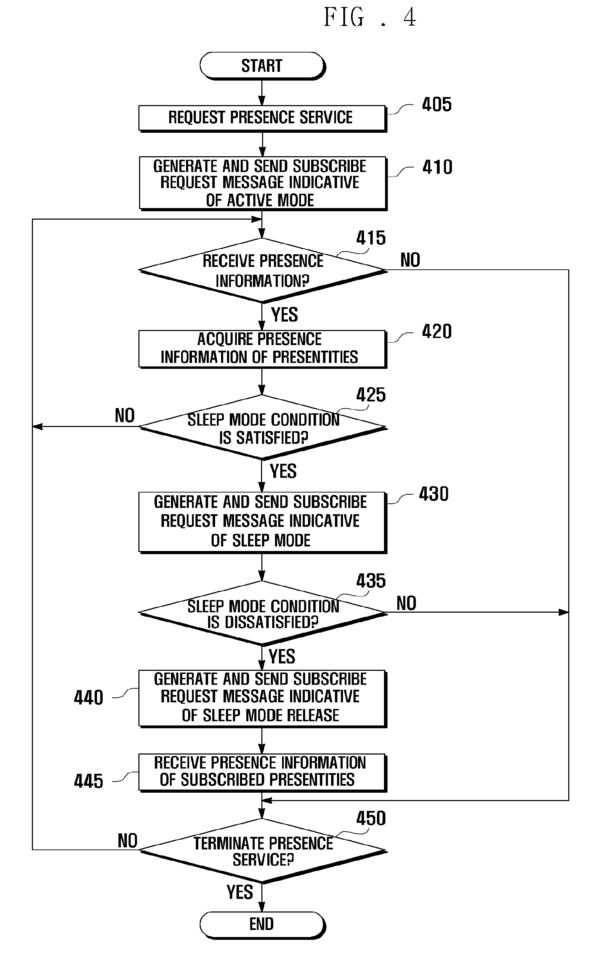

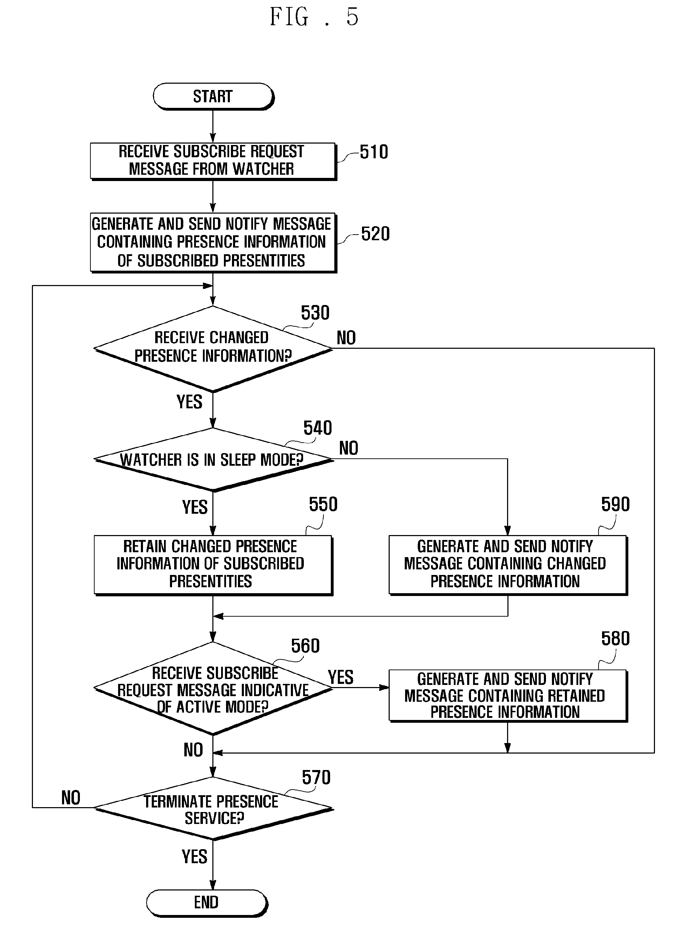

If the watcher 110 wants to know the presentities' presence status, the watcher 110 sends a SUBSCRIBE request message 375 indicative of the release of its sleep mode to the presence server 120. The SUBSCRIBE request message is identical with that of Table 1. If the SUBSCRIBE request message indicative of the release of the sleep mode, the presence server 120 sends the OK message 380 to the watcher 110. At this time, the presence server 120 can accept the request by performing an authentication and acceptance procedure. Once the operation mode of a watcher is updated into 'active', the presence server checks whether there is any change of presence information of the presentities subscribed by the watcher while the watch is in sleep mode and sends, if any, a NOTIFY message containing the retained presence information to the watcher. Since the presence information of the first presentity1 130 and second presentity2 131 has been changed while the watcher 110 is in sleep mode, the presence server 120 sends the watcher 110 a NOTIFY message 385 including the changed presence information of the first presentity1 130 and second presentity2 131. The changed presence information carried by the NOTIFY message is the changed parts of the presence information (i.e., partial presence information) of the first presentity1 130 and second presentity2 131. Upon receipt of the NOTIFY message, the watcher 110 sends the 200 OK message 390 to the presence server 120. In this manner, the presence server 120 suspends the transmission of the changed presence information of the presentities subscribed by the watcher when the watcher is in sleep mode, thereby reducing unnecessary resource waste. The method for providing a presence service according to an exemplary embodiment of the present invention is described from the viewpoints of the watcher and the presence server separately with reference to FIGURES 4 and 5.

FIGURE 4 illustrates a flowchart for a method for providing a presence service according to an exemplary embodiment of the present invention from the viewpoint of a watcher.

Referring to FIGURE 4, the watcher 110 (see FIGURE 1) first detects a user request for presence service (block 405). If the user request for presence service is detected, the watcher 110 generates a SUBSCRIBE request message and sends the subscriber request message to the presence server 120 (block 410). The SUBSCRIBE request message is formatted as shown in Table 1. It is noted that all the operations of the watcher at every step actually can be performed or controlled by a controller of the watcher 110. After transmitting the SUBSCRIBE request message, the watcher 110 determines whether a NOTIFY message containing the presence information of the presentities subscribed by the watcher 110 (block 415). If no NOTIFY message is received in the predetermined time, the procedure goes to step 450. If a NOTIFY message is received in a predetermined time, the watcher 110 acquires the presence information of the subscribed presentities from the NOTIFY message (block 420). Although not depicted in FIGURE 4, the watcher 110 can send a response message to the presence server 120 in response to the NOTIFY message.

After acquiring the presence information, the watcher 110 monitors to determine whether a sleep mode condition is satisfied (block 425). The sleep mode condition can be set with various parameters by the user. In this embodiment of the present invention, the sleep mode condition is a time duration for which no user input is detected and the watcher is in idle state, e.g., the off-time of the display unit of the watcher. The time duration can be set to a value to some extent that does not cause resource waste to transmit SUBSCRIBE request message having the operation mode field. In order to count the time duration, a time can be started at the time when the display unit switches off. If the sleep mode condition is satisfied, the watcher 110 generates a SUBSCRIBE request message indicative of sleep mode and sends the SUBSCRIBE request message to the presence server 120 (see message 345 of FIGURE 3) (block 430). The SUBSCRIBE request message indicative of sleep mode has the operation mode field set to 'sleep' as shown in table 2. If the sleep mode condition is not satisfied at step 425, the procedure goes to block 415. After transmitting the SUBSCRIBE request message indicative of sleep mode at block 430, the watcher 110 monitors to determine whether the sleep mode condition becomes dissatisfied (block 435). This means that the sleep mode condition satisfied at block 425 returns to be dissatisfied due to an event such as switching on the display unit.

If the sleep mode condition does not become dissatisfied, the procedure goes to block 450. Otherwise, if the sleep mode condition become dissatisfied at block 435, the watcher 110 generates a SUBSCRIBE request message indicative of active mode and sends the SUBSCRIBE request message to the presence server 120 (see step 375 of FIGURE 3) (block 440). The SUBSCRIBE request message indicative of active mode has the operation mode field set to 'active' as shown in Table 1. In case that there is any presence information of the subscribed presentities that is retained in the presence server 120 while the watcher 110 is in sleep mode, the watcher 110 receives the presence information from the presence server 120 (see step 385 of FIGURE 3) (block 445). After acquiring the presence information retained in the presence server 120, the watcher 110 determines whether a presence service termination event is detected (block 450). If a presence service termination event is detected, the watcher 110 finishes the presence service. Otherwise, if no presence service termination event is detected, the procedure goes to block 415. The presence service termination event can be occurred when the time set in an Expire field of a REGISTER message sent to the IMS server expires or by transmitting a REGISTER message of which Expire field set to zero to the IMS server to release the connection with the IMS server. Although not illustrated in FIGURE 4, the watcher 110 can send response message (e.g. 200 OK message) to the presence server 120 in response to the message transmitted by the presence server 120.

FIGURE 5 illustrates a flowchart for a method for providing a presence service according to an exemplary embodiment of the present invention from the viewpoint of a presence server.

Referring to FIGURE 5, the presence server 120 (see FIGURE 1) receives a SUBSCRIBE request message transmitted by the watcher 110 (see FIGURE 1) (block 510). If a SUBSCRIBE request message is received, the presence server 120 checks the presentities which the watcher 110 has subscribed to the IMS server, generates a NOTIFY message containing the presence information of the subscribed presentities, and sends the NOTIFY message to the watcher 110 (block 520). Here, the NOTIFY message can contain the full presence information (see message 215 of FIGURE 2 and block 315 of FIGURE 3). After transmitting the NOTIFY message, the presence server 120 monitors to determine whether a PUBLISH message indicative of a change of the presence information is received from any of the presentities subscribed by the watcher 110 (block 530). It is assumed that the presentities subscribed by the watcher 110 include the first presentity1 130 and second presentity2 131 of FIGURES 2 and 3. If a PUBLISH message indicative of the presence information change is received from one of the first presentity1 130 and second presentity2 131, the presence server 120 checks whether the operation mode of the watcher 110 is registered as sleep mode (block 540). If the operation mode of the watcher 110 is registered as sleep mode, the presence server 120 suspends a transmission of the changed presence information carried by the PUBLISH message to the watcher 110 and retains the changed presence information (block 550). Otherwise, if the operation mode of the watcher 110 is not set to 'sleep', the procedure goes to block 570. Here, the operation mode of the watcher 110 can be indicated by the operation mode field of the SUBSCRIBE request message transmitted by the watcher 110 as shown in Tables 1 and 2. The operation mode field of the SUBSCRIBE request message can be set to 'active' or 'sleep'.

While retaining the charged presence information, the presence server 120 monitors to determine whether a SUBSCRIBE request message indicative of release of the sleep mode (block 560). If no SUBSCRIBE request message indicative of release of the sleep mode, the presence server 120 determines whether a presence service termination event is detected (block 570). If a presence service termination event is detected, the presence server 120 terminates the presence service to the watcher 110. If a SUBSCRIBE request message indicative of release of the sleep mode at block 560, the presence server 120 generates a NOTIFY message containing the presence information retained while the watcher 110 is in sleep mode and sends the NOTIFY message to the watcher 110 (see step 385 of FIGURE 3) (block 580). Here, the SUBSCRIBE request message indicative of release of the sleep mode can be formatted to have the operation mode field set to 'active' as shown in Table 1. Returning to block 540, if the operation mode of the watcher 110 is not registered as sleep mode (i.e., if the operation mode of the watcher 110 is registered as active mode), the presence server 120 generates a NOTIFY message containing the change presence information and sends the NOTIFY message to the watcher 110 (block 590) and then the procedure goes to block 570. Here, the NOTIFY message can carry only the changed part of the presence information, i.e., partial presence information, (see message 235 of FIGURE 2 and block 335 of FIGURE 3). Although not described in FIGURE 5, the presence server 120 can send a response message (e.g. 200 OK message) in response to the SUBSCRIBE request message transmitted by the watcher 110 (see FIGURES 2 and 3). In this manner, the presence server can suspend the transmission of the presence information of the presentities subscribed by the watcher when the watcher is in sleep mode, thereby preventing the presence information from being transmitted unnecessarily and thus reducing waste of resources.

As described above, the method and system for providing presence service according to the present invention allows the presence server to send the presence information of the presentities subscribed by a watcher only when the watcher is operating in active mode, resulting in reduction of resource waste. Since the presence service is suspended when presence information of the subscribed presentities is out of user's interest, it is possible to reduce the processing overhead and power consumption of the terminal.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for providing a presence service, comprising:
receiving, at a presence server, a message requesting suspension of delivery of presence information of presentities subscribed by a watcher, the suspension request message being transmitted by the watcher of which a sleep mode condition is satisfied;
receiving a changed part of the presence information from one of the presentities;
retaining the changed part of the presence information;
receiving a message requesting restart of the delivery of presence information from the watcher; and
sending the changed part of the presence information to the watcher in respons e to the restart request message.

2. The method of claim 1, wherein the sleep mode condition is a time duratio n for which no event triggering an operation of the watcher is detected.

3. The method of claim 1, wherein the sleep mode condition is a time duratio n for which a display of the watcher is not switched on.

4. The method of claim 1, wherein the suspension request message is a SUB SCRIBE request message having an operation mode field set to 'sleep'.

5. The method of claim 1, wherein the restart request message is a SUBSCR IBE request message having an operation mode field set to 'active'.

6. The method of claim 1, further comprising:
receiving a message requesting the presence information of the presentities subscribed by the watcher before the receipt of the suspension request message;
receiving a changed part of the presence information from at least one of the presentities; and
delivering the changed part of the presence information to the watcher.

7. The method of claim 6, further comprising subscribing, by the watcher, the presentities to a Multimedia Subsystem (IMS) server.

8. A system for providing a presence service, comprising:
a server configured to receive and store the presence information provided by at least one presentity, the server configured to at least one of:
deliver the presence information to at least one watcher; and
retain the presence information according to the requests of the watcher.

9. The system of claim 10, wherein the server receives from the watcher, whe n the sleep mode condition is satisfied, a SUBSCRIBE request message having an op eration mode field set to 'sleep'.

10. The system of claim 8, wherein the server receives from the watcher, whe n the sleep mode condition is dissatisfied, a SUBSCRIBE request message having an operation mode field set to 'active'.

11. For use in a system for providing a presence service, a portable terminal comprising:
a watcher configured to request initiation of the presence service when a sleep mode condition is satisfied and suspension of the presence service when the sleep mode condition is dissatisfied; and communicate with a server that receives and stores a presence information provided by at least one presentity, where the watcher is configured to at least one of:
receive the presence information from the server; and
send a request to the server to retain the presence information.

12. The terminal of claim 11, wherein the watcher determines, when no event triggering an operation of the watcher for a predetermined time duration, that the sleep mode condition is satisfied.

13. The terminal of claim 11, wherein the watcher determines, when a display of the watcher is not switched on for a predetermined time duration, that the sleep mod e condition is satisfied.

14. The terminal of claim 11, wherein the server receives from the watcher, wh en the sleep mode condition is dissatisfied, a SUBSCRIBE request message having a n operation mode field set to 'active'.

15. The terminal of claim 11, wherein the at least one presentity is subscribed to a Multimedia Subsystem (IMS) server by the watcher.
